# EUROPÄISCHE PATENTANMELDUNG

(11) **EP 4 234 970 A1**
(43) Veröffentlichungstag der Anmeldung: **30.08.2023**
(21) Anmeldenummer: 23156099.6
(22) Anmeldetag: 10.02.2023
(51) Int. Cl.: F16F 7/00

(54) **SCHOCKABSORBER MIT MITTELN ZUM GESCHÜTZTEN AUSSENDEN OPTISCHER SIGNALE**

(30) Priorität: 14.02.2022 DE 102022201502
(71) Anmelder: LightnTec GmbH, 76131 Karlsruhe (DE)
(72) Erfinder: KALL, Florian, 76137 Karlsruhe (DE); NEHRHOFF VON HOLDERBERG, Lutz, 76227 Karlsruhe (DE)
(74) Vertreter: Kohler Schmid Möbus Patentanwälte

(57) **Zusammenfassung**

Die Erfindung betrifft einen Schockabsorber (10^{I-V}) zur Aufnahme eines mechanischen Drucks. Der Schockabsorber (10^{I-V}) weist eine Dämpferanordnung (12) auf. Die Dämpferanordnung (12) weist eine verformbare Dämpferschicht (14) und eine erste Leuchtfolie (16) mit Leuchtmitteln (18a, 18b) auf, wobei die Dämpferschicht (14) und die erste Leuchtfolie (16) hintereinander angeordnet sind. Die Dämpferschicht (14) und die erste Leuchtfolie (16) dehnen sich quer zu der Richtung aus, in der sie hintereinander angeordnet sind.

## Beschreibung

### Hintergrund der Erfindung

Die Erfindung betrifft einen Schockabsorber zur Aufnahme eines mechanischen Drucks. Der Schockabsorber weist insbesondere Mittel zum geschützten Aussenden optischer Signale auf.

Schockabsorber, typischerweise auch als Stoßdämpfer bezeichnet, sind aus dem Stand der Technik bekannt, zum Beispiel in der Form von Dämpfungsplatten oder Dämpfungsmatten, welche eine Fläche, auf der sie aufliegen, vor einer Krafteinwirkung durch Stöße schützen können. Derartige Schockabsorber sind nicht dazu ausgelegt, auf eine geschützte Weise flächig verteilte optische Signale auszusenden, etwa zur Kennzeichnung der zu schützenden Fläche oder zur Vermittlung von Informationen an einen Betrachter des Schockabsorbers wie etwa Warnsignale oder einen Hinweis auf einen erfolgten Stoß des Schockabsorbers mit einem Stoßpartner.

### Aufgabe der Erfindung

Es ist Aufgabe der vorliegenden Erfindung, einen Schockabsorber bereitzustellen, der zum geschützten Aussenden flächig verteilter optischer Signale geeignet ist. Es ist weiter Aufgabe der Erfindung, eine Bande mit einem solchen Schockabsorber bereitzustellen. Außerdem ist es Aufgabe der Erfindung, ein Bauteil, hergestellt durch Tiefziehen oder Thermoformen, mit einem solchen Schockabsorber zur Verfügung zu stellen.

### Beschreibung der Erfindung

Diese Aufgabe wird erfindungsgemäß durch einen Schockabsorber nach Anspruch 1 gelöst. Die Aufgabe wird weiter durch eine Bande nach Anspruch 16 und ein Bauteil nach Anspruch 17 gelöst. Vorteilhafte Ausgestaltungen ergeben sich aus den rückbezogenen Unteransprüchen.

Der erfindungsgemäße Schockabsorber ist mit einer Dämpferanordnung ausgestattet, die folgende Elemente aufweist:
i. eine elastisch und/oder plastisch verformbare Dämpferschicht;
ii. eine erste Leuchtfolie, aufweisend Leuchtmittel, wobei die Dämpferschicht und die erste Leuchtfolie entlang einer Richtung einer Abfolgeachse nacheinander angeordnet sind, wobei sich die Dämpferschicht und die erste Leuchtfolie quer zu der Richtung der Abfolgeachse erstrecken.

Die Dämpferschicht nimmt unter Verformung Energie auf, mit der ein Stoßpartner bei einem Stoß auf den Schockabsorber einwirkt. Der Druck auf die erste Leuchtfolie wird abgefedert. Hierdurch ist die erste Leuchtfolie vor einer Beschädigung infolge des Stoßes besser geschützt.

Die Dämpferschicht ist vorzugsweise transparent für die von der Leuchtfolie emittierte Strahlung ausgebildet. Unter "sich Erstrecken" wird insbesondere verstanden, dass die Dämpferschicht und die erste Leuchtfolie senkrecht zu der Abfolgeachse eine Fläche ausbilden. Die Dämpferschicht und die erste Leuchtfolie weisen jeweils senkrecht zu der Abfolgeachse Ausdehnungen auf, die richtungsabhängig sein können. Dabei gilt für einen Faktor AFKS, der das Verhältnis der kleinsten senkrechten Ausdehnung der Dämpferanordnung zu der Längs-Ausdehnung der Dämpferanordnung entlang der Abfolgeachse angibt, insbesondere 1 ≤ AFKS ≤ 10⁸, bevorzugt 100 ≤ AFKS ≤ 10⁷, besonders bevorzugt 10³ ≤ AFKS ≤ 10⁶, ganz besonders bevorzugt 10⁴ ≤ AFKS ≤ 10⁵. Entsprechend gilt für einen Faktor AFGS, der das Verhältnis der größten senkrechten Ausdehnung zu der Längs-Ausdehnung der Dämpferanordnung entlang der Abfolgeachse angibt, insbesondere 1 ≤ AFGS ≤ 10⁹, bevorzugt 10 ≤ AFGS ≤ 10⁸, besonders bevorzugt 100 ≤ AFGS ≤ 10⁷, ganz besonders bevorzugt 10³ ≤ AFGS ≤ 10⁶.

Der Schockabsorber weist bevorzugt vom Boden aus gemessen eine Höhe von 1 m bis 10 m, bevorzugt 2 m bis 7 m, besonders bevorzugt 3 m bis 5 m auf. Der Schockabsorber weist bevorzugt in einer Richtung senkrecht zu seiner Höhe und zu der Abfolgeachse eine Länge von 10 m bis 100 m, bevorzugt 30 m bis 70 m, besonders bevorzugt 50 m bis 60 m, auf. Die Dämpferschicht und die erste Leuchtfolie weisen vorzugsweise jeweils eine Dicke von 1 µm bis 10 mm auf.

Die Abfolgeachse ist insbesondere eine Achse, die sich in einer Richtung erstreckt, in der die Dämpferschicht und die erste Leuchtfolie hintereinander angeordnet sind. Eine Richtung der Abfolgeachse bezeichnet insbesondere eine Richtung, in der sich die Abfolgeachse erstreckt. Die Abfolgeachse ist insbesondere senkrecht zu der Oberfläche der Dämpferschicht und/oder der ersten Leuchtfolie ausgerichtet. Vorzugsweise verläuft die Abfolgeachse senkrecht zu den einander zugewandten Teilflächen der jeweiligen Oberfläche der Dämpferschicht und der ersten Leuchtfolie.

### Bevorzugte Ausführungsformen und Weiterbildungen

Eine vorteilhafte Ausführungsform des Schockabsorbers zeichnet sich durch ein erstes Verbindungselement aus, das die erste Leuchtfolie und die Dämpferschicht miteinander verbindet. Das erste Verbindungselement bewirkt eine Erhöhung der Stabilität des Schockabsorbers, indem es die erste Leuchtfolie und die Dämpferschicht aneinander befestigt, gegebenenfalls unter einer Beabstandung.

Bei einer bevorzugten Ausgestaltung des Schockabsorbers weist die erste Leuchtfolie Leuchtdioden als Leuchtmittel auf, die insbesondere in einer, insbesondere rechtwinkligen, Matrix angeordnet sind. Leuchtdioden zeichnen sich durch eine kompakte Ausgestaltung und eine hohe Lebensdauer aus. Bevorzugt weist die erste Leuchtfolie eine pixelangesteuerte LED-Matrix auf. Die Leuchtfolie weist besonders bevorzugt eine Steuerung, insbesondere eine digitale Steuerung, zum Steuern der Leuchtdioden auf.

Bei einer weiteren Variante des Schockabsorbers ist die erste Leuchtfolie mit einem Innenradius von weniger als 100 mm, insbesondere von weniger als 50 mm, bevorzugt von weniger als 10 mm, rollbar. Eine derartige Leuchtfolie lässt sich besonders raumsparend aufbewahren und transportieren.

Die erste Leuchtfolie des Schockabsorbers weist gemäß einer weiteren Ausführungsform des Schockabsorbers eine Schnittstelle zur elektrischen Verbindung mit weiteren Leuchtfolien auf. Dadurch bilden die Schockabsorber zusammen eine Oberfläche aus, die an unterschiedliche Auflageflächen angepasst werden kann.

Die Dämpferschicht weist bei einer vorteilhaften Variante des Schockabsorbers ein elastisches Element auf. Dadurch kann die Dämpferschicht nach einer Verformung durch einen Stoß wiederverwendet werden und hat bei einem Stoß eine abfedernde Wirkung. Das elastische Element ist insbesondere als ein Luftkissen, als ein Federelement und/oder als ein reversibel verformbares Plastikteil ausgebildet.

Bei einer bevorzugten Ausführungsform des Schockabsorbers weist das erste Verbindungselement ein Luftkissen und/oder eine Halterung zum Halten der Dämpferanordnung auf. Durch ein Luftkissen des Verbindungselements lässt sich eine zusätzliche Abfederung einer Krafteinwirkung durch einen Stoß auf den Schockabsorber bewirken. Ein solches Luftkissen sorgt im gefüllten Zustand auch für einen flexiblen Abstand zwischen der Dämpferanordnung und weiteren Elementen des Schockabsorbers, falls dieser Abstand erwünscht ist. Eine Halterung hält die Dämpferanordnung in einer festen Position. Bevorzugt weist die Halterung Kunststoff und/oder Metall, insbesondere Aluminium, als Material auf. Die Halterung weist insbesondere Halteelemente zum Halten der Dämpferanordnung auf, vorzugsweise Halteelemente zum Halten der Dämpferschicht und/oder der Leuchtfolie. Die Halteelemente sind insbesondere als Seile, Haltebänder, Klammern und/oder Haltearme ausgebildet. Bevorzugt weist die Halterung einen Halterahmen auf, insbesondere aus Aluminium. Der Halterahmen weist vorzugsweise die Halteelemente auf.

Bevorzugt ist eine Variante des Schockabsorbers, bei der der Schockabsorber eine druckdichte Zugangsklappe für einen Zugang zu der ersten Leuchtfolie aufweist. Durch die Zugangsklappe kann die erste Leuchtfolie repariert oder ausgetauscht werden, falls sie defekt ist.

Eine vorteilhafte Ausgestaltung des Schockabsorbers zeichnet sich dadurch aus, dass eine zweite Leuchtfolie neben der Dämpferschicht in Richtung der Abfolgeachse gegenüber der ersten Leuchtfolie angeordnet ist. Hierdurch kann der Schockabsorber in beide Richtungen entlang der Abfolgeachse optische Signale aussenden.

Bevorzugt ist eine Ausführungsform des Schockabsorbers, bei der eine transparente erste Oberflächenschicht entlang der Abfolgeachse nach der Dämpferanordnung angeordnet ist, wobei sich die Dämpferanordnung und die erste Oberflächenschicht quer zu der Richtung der Abfolgeachse erstrecken, wobei insbesondere eine zweite Oberflächenschicht neben der Dämpferanordnung angeordnet ist, die der ersten Oberflächenschicht gegenüberliegt. Die erste Oberflächenschicht schützt die Dämpferanordnung und besonders die erste Leuchtfolie vor einer Berührung. Sie stellt auch einen zusätzlichen Schutz vor einer Krafteinwirkung durch einen Stoß dar. Die erste Oberflächenschicht ist insbesondere transparent für die von der Leuchtfolie ausgesendete Strahlung ausgebildet.

Eine weitere Variante des Schockabsorbers zeichnet sich dadurch aus, dass die erste Oberflächenschicht als eine Folie ausgestaltet ist und/oder Acryl und/oder Acrylglas als Material aufweist. Materialien aus Acryl, insbesondere Acrylglas, zeichnen sich durch eine hohe Bruchfestigkeit aus. Eine Ausgestaltung der ersten Oberflächenschicht als Folie bringt den Vorteil mit sich, dass die erste Oberflächenschicht raumsparend transportiert und gelagert werden kann.

Der Abstand zwischen der von der Dämpferanordnung in Richtung der Abfolgeachse abgewandten Außenseite der ersten Oberflächenschicht und der Dämpferanordnung beträgt bei einer weiteren Ausgestaltung des Schockabsorbers zwischen 1 µm und 1 m, insbesondere zwischen 1 cm und 90 cm, vorzugsweise zwischen 10 cm und 80 cm, besonders bevorzugt zwischen 40 cm und 60 cm. Insbesondere ist die erste Leuchtfolie mit einem Abstand zwischen 1 µm und 1 m von der ersten von der Dämpferanordnung in Richtung der Abfolgeachse abgewandten Außenseite der ersten Oberflächenschicht angeordnet. Ein kleiner Abstand bewirkt eine kompakte Ausgestaltung des Schockabsorbers in Richtung der Abfolgeachse. Bei einigen Ausführungsformen des Schockabsorbers liegt die Dämpferanordnung an der ersten Oberflächenschicht an. Insbesondere ist die Dämpferanordnung an der ersten Oberflächenschicht befestigt, vorzugsweise durch Bonden, insbesondere mit zum Beispiel OCA Folien (optical clear adhesive). Größere Abstände bewirken, dass die erste Oberflächenschicht eine Stoßenergie, die auf sie einwirkt, gar nicht oder in geringerem Ausmaß durch Verformung dieser Oberflächenschicht auf die dahinterliegende Dämpferanordnung überträgt, da zwischen der ersten Oberflächenschicht und der Dämpferanordnung ein Zwischenraum ausgebildet ist.

Die Dämpferschicht ist bei einer vorteilhaften Ausgestaltung des Schockabsorbers in Richtung der Abfolgeachse zwischen der ersten Oberflächenschicht und der ersten Leuchtfolie angeordnet. Die Dämpferschicht absorbiert hier die Stoßenergie, die bei einem Stoß durch die Oberflächenschicht auf die Dämpferschicht übertragen wird, um so die erste Leuchtfolie vor Schäden zu schützen.

Gemäß einer weiteren Ausführungsform des Schockabsorbers ist die erste Leuchtfolie in Richtung der Abfolgeachse zwischen der ersten Oberflächenschicht und der Dämpferschicht angeordnet. Die erste Leuchtfolie gibt hier einen Teil der Stoßenergie, die von der Oberflächenschicht bei einem Stoß auf die erste Leuchtfolie übertragen wird, an die Dämpferschicht ab, wodurch die erste Leuchtfolie ebenfalls vor Schäden besser geschützt ist.

Neben der ersten Oberflächenschicht ist bei einer bevorzugten Variante des Schockabsorbers in Richtung der Abfolgeachse gegenüber der Dämpferanordnung ein zweites Verbindungselement angeordnet. Durch das zweite Verbindungselement wird der Schockabsorber stabiler ausgebildet, da es die übrigen Elemente des Schockabsorbers wenigstens teilweise zusätzlich zu dem ersten Verbindungselement miteinander verbindet.

Eine erfindungsgemäße Bande weist einen Schockabsorber nach einer der vorgenannten Ausführungsformen auf. Eine solche Bande zeichnet sich durch einen Schutz vor der Belastung durch Stöße auf die Bande aus, wobei die Bande gleichzeitig auf geschützte Weise optische Signale aussenden kann. Eine solche Bande mit einer Schutzfunktion durch den Schockabsorber kann insbesondere bei verschiedenen Sportarten verwendet werden, bei denen Personen mit hohen Geschwindigkeiten in Bewegung sind, zum Beispiel Skifahren oder Eishockey. Die Banden können aus Kunststoff, Metall und/oder Aluminium ausgebildet sein und/oder ein Luftkissen aufweisen. Das Luftkissen kann insbesondere dazu ausgebildet sein, durch einen Kompressor aufgeblasen zu werden, wobei das Luftkissen Luft bei einem Stoß des Schockabsorbers mit einem Stoßpartner kontrolliert entweichen lässt, vorzugsweise durch ein Überdruckventil.

Ein erfindungsgemäßes Bauteil ist durch Tiefziehen oder Thermoformen hergestellt und weist einen Schockabsorber nach einer der vorgenannten Ausführungsformen auf. Ein solches Bauteil ist vor Beschädigung durch Stöße geschützt und kann gleichzeitig auf geschützte Weise optische Signal aussenden. Das Bauteil ist vorzugsweise als Stoßstange oder Stoßfänger, insbesondere eines Kraftfahrzeugs, ausgebildet.

Weitere Vorteile der Erfindung ergeben sich aus der Beschreibung und der Zeichnung. Ebenso können die vorstehend genannten und die noch weiter ausgeführten Merkmale jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine schematische dreidimensionale Darstellung einer ersten Ausführungsform eines Schockabsorbers;
- Fig. 2: zeigt einen schematischen Längsschnitt durch die erste Ausführungsform des Schockabsorbers;
- Fig. 3: zeigt einen schematischen Längsschnitt durch eine zweite Ausführungsform des Schockabsorbers;
- Fig. 4: zeigt eine schematische Seitenansicht einer dritten Ausführungsform des Schockabsorbers;
- Fig. 5: zeigt schematisch eine Vorderansicht eines Schockabsorber-Trägers.

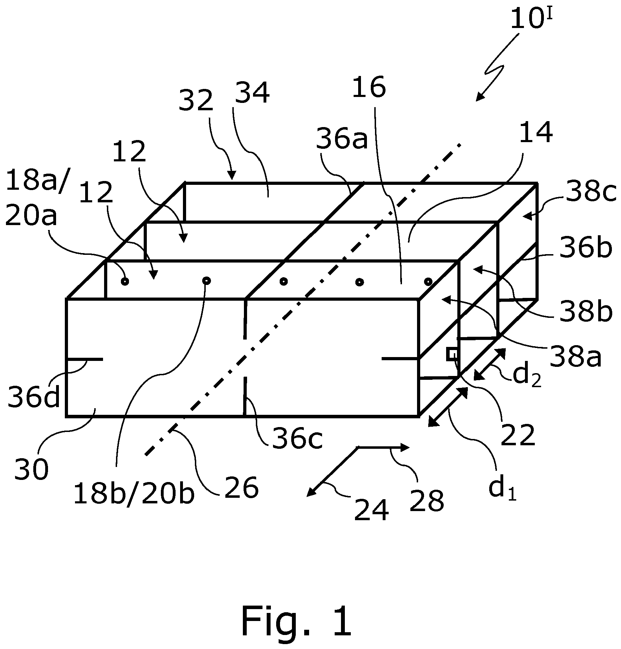

In **Fig. 1** ist eine schematische dreidimensionale Darstellung einer ersten Ausführungsform eines Schockabsorbers **10^{I}** gezeigt. Eine Dämpfungsanordnung **12** des Schockabsorbers 10^{I} weist eine verformbare Dämpferschicht **14** auf. Außerdem weist die Dämpferanordnung 12 eine erste Leuchtfolie **16** auf, auf der Leuchtmittel angeordnet sind, von denen in der Figur beispielhaft zwei mit **18a, 18b** bezeichnet sind. Die Leuchtmittel 18a, 18b sind als in Reihen angeordnete Leuchtdioden **20a, 20b** ausgestaltet. Eine Schnittstelle **22** der ersten Leuchtfolie 16 ermöglicht die Anbindung der ersten Leuchtfolie 16 an weitere Leuchtfolien (nicht gezeigt).

Die Dämpferschicht 14 und die erste Leuchtfolie 16 sind in einer Richtung **24** einer Abfolgeachse **26** nacheinander angeordnet. Dabei erstrecken sich die Dämpferschicht 14 und die erste Leuchtfolie 16 in einer Querrichtung **28** senkrecht zu der Richtung 24 der Abfolgeachse 26.

Eine transparente erste Oberflächenschicht **30** des Schockabsorbers 10^{I} ist in der Richtung 24 der Abfolgeachse 26 nach der Dämpferanordnung 12 angeordnet. Die transparente erste Oberflächenschicht 30 dehnt sich in der Querrichtung 28 senkrecht zu der Richtung 24 der Abfolgeachse 26 aus.

Ein erstes Verbindungselement **32** des Schockabsorbers 10^{I} verbindet die erste Leuchtfolie 16, die Dämpferschicht 14 und in der gezeigten Ausführungsform auch die erste Oberflächenschicht 30 miteinander. Eine Halterung **34** des ersten Verbindungselements 32 weist Haltearme **36a, 36b, 36c, 36d** zum Halten der ersten Leuchtfolie 16, der Dämpferschicht 14 und der ersten Oberflächenschicht 30 auf.

Die Dämpferanordnung 12 und die erste Oberflächenschicht 30 sind mit einem ersten Abstand **d₁** voneinander beabstandet, um die Dämpferanordnung 12 vor Einwirkungen durch Stöße besser zu schützen. Die erste Leuchtfolie 16 und die Dämpferschicht 14 der Dämpferanordnung 12 sind einem zweiten Abstand **d₂** voneinander beabstandet. Zwischen der ersten Oberflächenschicht 30, der ersten Leuchtfolie 16, der Dämpferschicht 14 und dem ersten Verbindungselement 32, die entlang der Abfolgeachse 26 hintereinander angeordnet sind, sind Zwischenräume **38a, 38b, 38c** ausgebildet.

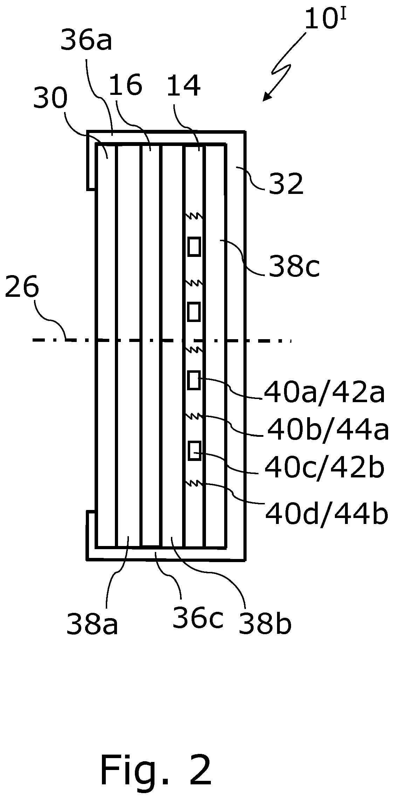

**Fig. 2** zeigt einen schematischen Längsschnitt durch die erste Ausführungsform des Schockabsorbers 10^{I}. Die Dämpferschicht 14 weist zur reversiblen Verformung elastische Elemente auf, wobei in der Figur beispielhaft vier elastische Elemente mit **40a, 40b, 40c, 40d** bezeichnet sind. Die elastischen Elemente 40a, 40b, 40c, 40d sind in Form von Luftkissen **42a, 42b** und Federn **44a, 44b** ausgebildet. Das erste Verbindungselement 32 weist die Haltearme 36a, 36c auf, um die erste Oberflächenschicht 30, die erste Leuchtfolie 16 und die Dämpferschicht 14 zu verbinden, zwischen denen die Zwischenräume 38a, 38b, 38c ausgebildet sind. Die erste Oberflächenschicht 30, die erste Leuchtfolie 16, die Dämpferschicht 14 und das erste Verbindungselement 32 sind entlang der Abfolgeachse 26 hintereinander angeordnet.

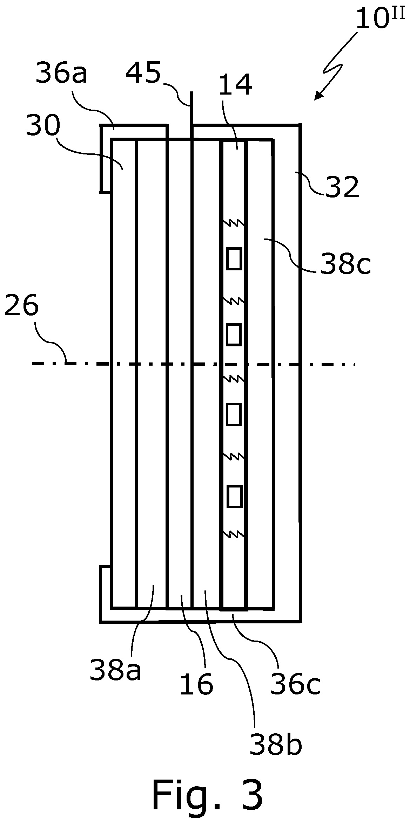

**Fig. 3** zeigt einen schematischen Längsschnitt durch eine zweite Ausführungsform des Schockabsorbers **10^{II}.** Wie bei der ersten Ausführungsform des Schockabsorbers 10^{I} (vgl. Fig. 2) weist das erste Verbindungselement 32 die Haltearme 36a, 36c auf, um die erste Oberflächenschicht 30, die erste Leuchtfolie 16 und die Dämpferschicht 14 zu verbinden, zwischen denen die Zwischenräume 38a, 38b, 38c ausgebildet sind. Die erste Oberflächenschicht 30, die erste Leuchtfolie 16, die Dämpferschicht 14 und das erste Verbindungselement 32 sind entlang der Abfolgeachse 26 hintereinander angeordnet. Im Unterschied zu der ersten Ausführungsform weist der Schockabsorber 10^{II} in der zweiten Ausführungsform eine druckdichte Zugangsklappe **45** für einen Zugang zu der ersten Leuchtfolie 16 auf, um die erste Leuchtfolie 16 reparieren oder austauschen zu können.

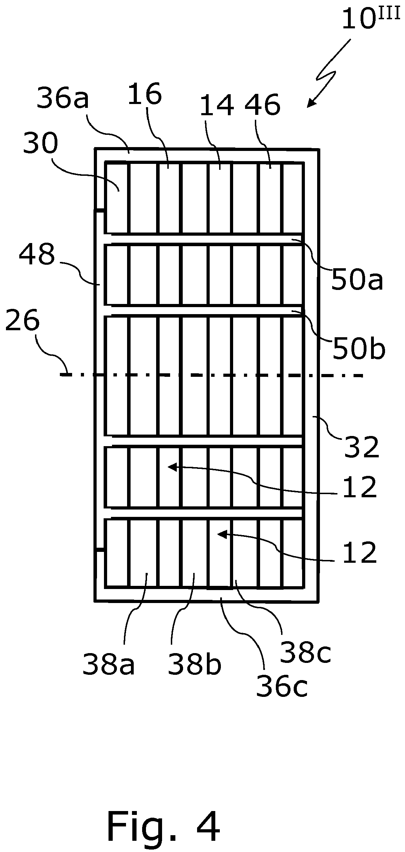

**Fig. 4** zeigt eine schematische Seitenansicht einer dritten Ausführungsform des Schockabsorbers **10^{III}.** Wie bei der ersten Ausführungsform des Schockabsorbers 10^{I} (vgl. Fig. 2) weist das erste Verbindungselement 32 die Haltearme 36a, 36c auf, um die erste Oberflächenschicht 30, die erste Leuchtfolie 16 und die Dämpferschicht 14 zu verbinden, zwischen denen die Zwischenräume 38a, 38b, 38c ausgebildet sind. Die erste Oberflächenschicht 30, die erste Leuchtfolie 16, die Dämpferschicht 14 und das erste Verbindungselement 32 sind entlang der Abfolgeachse 26 hintereinander angeordnet. Im Unterschied zu der ersten Ausführungsform weist der Schockabsorber 10^{III} eine zweite Leuchtfolie **46** auf, die neben der Dämpferschicht 14 in Richtung der Abfolgeachse 26 gegenüber der ersten Leuchtfolie 16 angeordnet ist, sodass der Schockarbsorber 10^{III} in beide Richtungen entlang der Abfolgeachse 26 optische Signale aussenden kann, wozu das erste Verbindungselement 32 insbesondere transparent ausgebildet ist. Das erste Verbindungselement 32 weist bei der gezeigten Ausführungsform keinen Haltearm 36b auf. Neben der ersten Oberflächenschicht 30 befindet sich in Richtung der Abfolgeachse 26 gegenüber der Dämpferanordnung 12 ein zweites Verbindungselement **48** mit Haltearmen, von denen in der Figur beispielhaft zwei mit **50a, 50b** bezeichnet sind, um den Schockabsorber 10^{III} stabiler auszugestalten.

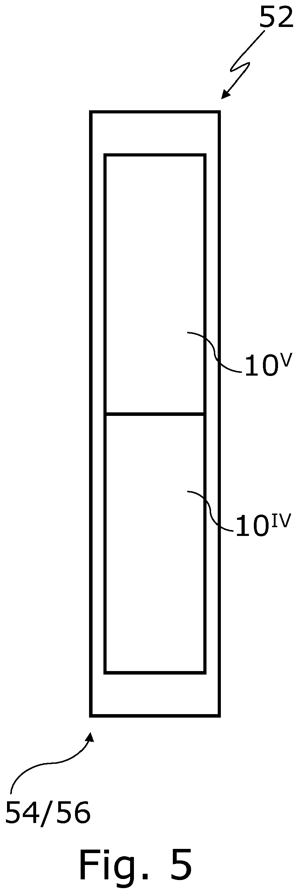

**Fig. 5** zeigt schematisch eine Vorderansicht eines Schockabsorber-Trägers **52,** auf dem zwei Schockabsorber **10^{IV}, 10^{V}** nach einer der in den vorherigen Figuren gezeigten Ausführungsformen befestigt sind. Der Schockabsorber-Träger 52 ist als Bande **54** oder als Bauteil **56** ausgestaltet, wobei das Bauteil 56 durch Tiefziehen oder Thermoformen hergestellt ist.

Unter Vornahme einer Zusammenschau aller Figuren der Zeichnung betrifft die Erfindung einen Schockabsorber 10^{I-V} zur Aufnahme eines mechanischen Drucks. Der Schockabsorber 10^{I-V} weist eine Dämpferanordnung 12 auf. Die Dämpferanordnung 12 weist eine verformbare Dämpferschicht 14 und eine erste Leuchtfolie 16 mit Leuchtmitteln 18a, 18b auf, wobei die Dämpferschicht 14 und die erste Leuchtfolie 16 hintereinander angeordnet sind. Die Dämpferschicht 14 und die erste Leuchtfolie 16 dehnen sich quer zu der Richtung aus, in der sie hintereinander angeordnet sind.

## Patentansprüche

1. Schockabsorber (10^{I-V}) zur Aufnahme eines mechanischen Drucks mit einer Dämpferanordnung (12), die aufweist:
i. eine elastisch und/oder plastisch verformbare Dämpferschicht (14);
ii. eine erste Leuchtfolie (16), aufweisend Leuchtmittel (18a, 18b), wobei die Dämpferschicht (14) und die erste Leuchtfolie (16) entlang einer Richtung (24) einer Abfolgeachse (26) nacheinander angeordnet sind, wobei sich die Dämpferschicht (14) und die erste Leuchtfolie (16) quer zu der Richtung (24) der Abfolgeachse (26) erstrecken.

2. Schockabsorber nach Anspruch 1 mit einem ersten Verbindungselement (32), das die erste Leuchtfolie (16) und die Dämpferschicht (14) miteinander verbindet.

3. Schockabsorber nach einem der vorhergehenden Ansprüche, wobei die erste Leuchtfolie (16) Leuchtdioden (20a, 20b) als Leuchtmittel (18a, 18b) aufweist, die insbesondere in einer Matrix angeordnet sind.

4. Schockabsorber nach einem der vorhergehenden Ansprüche, wobei die erste Leuchtfolie (16) mit einem Innenradius von weniger als 100 mm, insbesondere von weniger als 50 mm, bevorzugt von weniger als 10 mm, rollbar ist.

5. Schockabsorber nach einem der vorhergehenden Ansprüche, wobei die erste Leuchtfolie (16) eine Schnittstelle (22) zur elektrischen Verbindung mit weiteren Leuchtfolien aufweist.

6. Schockabsorber nach einem der vorhergehenden Ansprüche, wobei die Dämpferschicht (14) ein elastisches Element (40a, 40b, 40c, 40d) aufweist.

7. Schockabsorber nach einem der Ansprüche 2 bis 6, wobei das erste Verbindungselement (32) ein Luftkissen (42a, 42b) und/oder eine Halterung (34) zum Halten der Dämpferanordnung (12) aufweist.

8. Schockabsorber nach einem der vorhergehenden Ansprüche mit einer druckdichten Zugangsklappe (45) für einen Zugang zu der ersten Leuchtfolie (16).

9. Schockabsorber nach einem der vorhergehenden Ansprüche, wobei eine zweite Leuchtfolie (46) neben der Dämpferschicht (14) in Richtung (24) der Abfolgeachse (26) gegenüber der ersten Leuchtfolie (16) angeordnet ist.

10. Schockabsorber nach einem der vorhergehenden Ansprüche, aufweisend eine transparente erste Oberflächenschicht (30), die entlang der Abfolgeachse (26) nach der Dämpferanordnung (12) angeordnet ist, wobei sich die Dämpferanordnung (12) und die erste Oberflächenschicht (30) quer zu der Richtung (24) der Abfolgeachse (26) erstrecken, wobei insbesondere eine zweite Oberflächenschicht neben der Dämpferanordnung (12) angeordnet ist, wobei die zweite Oberflächenschicht der ersten Oberflächenschicht (30) gegenüberliegt.

11. Schockabsorber nach Anspruch 10, wobei die erste Oberflächenschicht (30) als eine Folie ausgestaltet ist und/oder Acryl und/oder Acrylglas als Material aufweist.

12. Schockabsorber nach einem der Ansprüche 10 oder 11, wobei der Abstand zwischen der von der Dämpferanordnung (12) in Richtung (24) der Abfolgeachse (26) abgewandten Außenseite der ersten Oberflächenschicht (30) und der Dämpferanordnung (12) zwischen 1 µm und 1 m, insbesondere zwischen 1 cm und 90 cm, vorzugsweise zwischen 10 cm und 80 cm, besonders bevorzugt zwischen 40 cm und 60 cm beträgt.

13. Schockabsorber nach einem der Ansprüche 10 bis 12, wobei die Dämpferschicht (14) in Richtung (24) der Abfolgeachse (26) zwischen der ersten Oberflächenschicht (30) und der ersten Leuchtfolie (16) angeordnet ist.

14. Schockabsorber nach einem der Ansprüche 10 bis 12, wobei die erste Leuchtfolie (16) in Richtung (24) der Abfolgeachse (26) zwischen der ersten Oberflächenschicht (30) und der Dämpferschicht (14) angeordnet ist.

15. Schockabsorber nach einem der Ansprüche 10 bis 14, wobei neben der ersten Oberflächenschicht (30) in Richtung (24) der Abfolgeachse (26) gegenüber der Dämpferanordnung (12) ein zweites Verbindungselement (48) angeordnet ist.

16. Bande (54), aufweisend einen Schockabsorber (10^{I-V}) nach einem der vorhergehenden Ansprüche.

17. Bauteil (56), hergestellt durch Tiefziehen oder Thermoformen, aufweisend einen Schockabsorber (10^{I-V}) nach einem der vorhergehenden Ansprüche.
